Europäisches Patentamt

European Patent Office

Office européen des brevets

(19)

(11) **EP 1 447 256 A1**

(12) # DEMANDE DE BREVET EUROPEEN

(43) Date de publication:
**18.08.2004 Bulletin 2004/34**

(51) Int Cl.⁷: **B60K 6/04**

(21) Numéro de dépôt: **04290280.9**

(22) Date de dépôt: **03.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **04.02.2003 FR 0301275**

(71) Demandeur: **Peugeot Citroen Automobiles SA 78140 Vélizy Villacoublay (FR)**

(72) Inventeur: **Rimaux. Stéphane 92190 Meudon (FR)**

(74) Mandataire: **Jacobson, Claude et al Cabinet Lavoix 2, Place d'Estienne d'Orves 75441 Paris Cedex 09 (FR)**

(54) **Procédé de commande de l'ensemble moteur d'un véhicule automobile de type hybride**

(57) Un ensemble moteur comporte un moteur irréversible et un moteur réversible relié à un accumulateur d'énergie. L'arbre de sortie reçoit une puissance mécanique motrice totale (P) résultant de la puissance mécanique irréversible ($P_{TH}$) et de la puissance mécanique réversible fournie ou absorbée ($P_{EL}$), l'ensemble moteur étant adapté pour fonctionner sélectivement suivant un mode réversible pur, et des modes hybrides. Suivant le procédé de commande de cet ensemble moteur :

- on détermine un mode de fonctionnement parmi un mode hybride et un mode réversible pur, et si le mode de fonctionnement est le mode hybride,
- on choisit comme point de fonctionnement le point $(P_{TH}, C, P_{BAT})$ vérifiant la relation suivante : $\frac{\partial C}{\partial P_{BAT}} = -\mu_1$.

FIG.5

EP 1 447 256 A1

## Description

L'invention porte sur un procédé de commande de l'ensemble moteur d'un véhicule automobile de type hybride.

Un ensemble moteur d'un véhicule hybride comporte un moteur « irréversible » et au moins un moteur « réversible » relié à un accumulateur d'énergie, et entraîne un arbre moteur relié aux roues motrices du véhicule, de sorte que l'arbre moteur reçoit une puissance mécanique motrice totale résultant de la puissance mécanique fournie par le moteur « irréversible » et de la puissance mécanique fournie par le ou les moteurs « réversibles ».

On entend par moteur « irréversible », un moteur ne fonctionnant que dans le sens de la transformation d'une énergie provenant d'un moyen de stockage d'énergie en un mouvement mécanique, tandis qu'un moteur « réversible » désigne un moteur pouvant aussi fonctionner suivant un mode de transformation de mouvement mécanique en énergie acheminée vers le moyen de stockage.

En particulier, l'invention s'appliquera à un ensemble moteur comprenant un moteur « irréversible » de type thermique et un moteur « réversible » de type électrique.

L'objet de l'invention vise à répartir de façon optimale les contributions de puissance respectives du moteur irréversible et du ou des moteurs réversibles, en vue de diminuer la consommation moyenne en énergie, en l'occurrence en carburant, en respectant diverses contraintes de fonctionnement du véhicule. Ces contraintes résultent d'une part de l'environnement du véhicule, à savoir en particulier les conditions de route, et d'autre part de consignes données par le conducteur, en particulier au moyen de la commande d'accélération (pédale d'accélération), et de l'état de l'accumulateur d'énergie réversible, en l'occurrence de l'état de charge de l'accumulateur électrique.

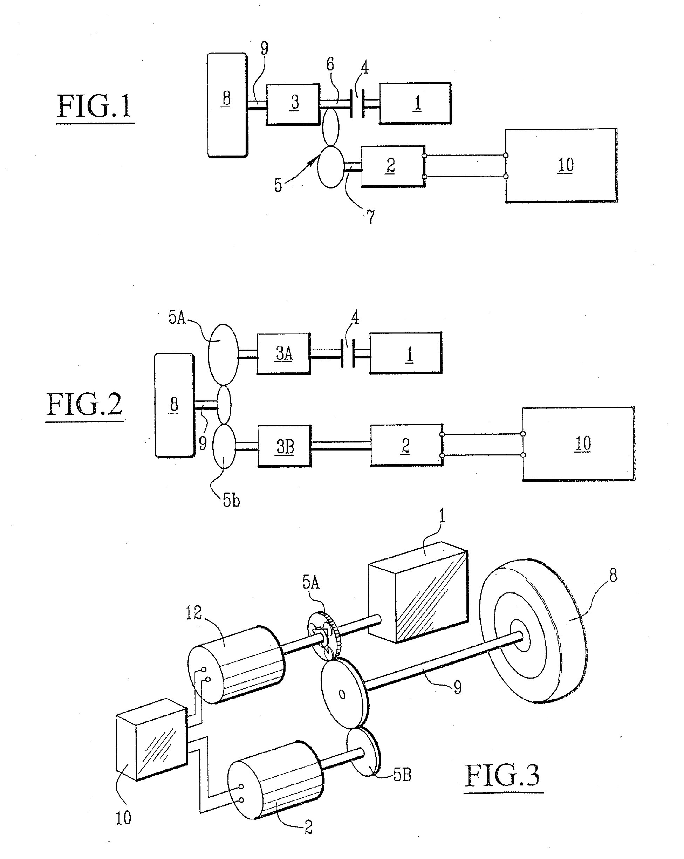

On connaît divers types de chaînes de traction mises en oeuvre sur des véhicules hybrides, dont on a représenté des exemples sur les figures 1 à 3.

A la figure 1, on a schématisé une chaîne de traction de véhicule hybride parallèle, qui comporte un moteur thermique 1, un moteur électrique 2, reliés l'un et l'autre à un variateur de vitesse 3, par l'intermédiaire d'éléments de transmission respectifs constitués d'une part d'un embrayage 4 et d'un train d'engrenages 5. Un arbre principal 6 relie le moteur thermique 1 au variateur de vitesse 3, l'embrayage 4 étant prévu sur l'arbre principal 6. L'arbre 7 du moteur électrique 2 est placé en parallèle par rapport à l'arbre principal 6, et engrène avec celui-ci par l'intermédiaire du train d'engrenages 5, en aval de l'embrayage 4.

Le terme « variateur » est ici pris au sens large. En effet, le variateur de vitesse 3 peut être de plusieurs types, notamment de type boîte de vitesses manuelle ou automatique, ou encore de type à variation continue. Il transmet un mouvement de rotation d'arbre à un ensemble de roues motrices schématisé par la roue 8, par l'intermédiaire d'un arbre de sortie de transmission 9.

Le moteur électrique 2 est alimenté électriquement par une batterie 10, laquelle est également adaptée pour recevoir une puissance électrique de la part du moteur électrique 2, en-dehors des phases motrices ou neutres de ce dernier.

A la figure 2, on a schématisé une configuration dite « double-arbre » d'une chaîne de traction de véhicule hybride parallèle. Dans cette configuration, le moteur thermique 1 et le moteur électrique 2 sont chacun associés à un variateur de vitesse respectif 3A, 3B, relié en sortie à l'arbre de sortie 9 par un train d'engrenages respectif 5A, 5B.

Un cas particulier d'une chaîne de traction à double-arbre a été schématisé à la figure 3. Il s'agit d'une configuration à dérivation continue de puissance, dans laquelle un deuxième moteur électrique 12 connecté à la batterie 10 permet de faire varier continûment la puissance délivrée par l'ensemble moteur 1, 2, 12 à l'arbre de sortie 9. Pour cela, le train d'engrenages 5A associé au moteur thermique 1 comprend un train planétaire dont le pignon planétaire est relié à l'arbre de sortie du deuxième moteur électrique 12, tandis que le porte-satellites est relié à l'arbre de sortie du moteur thermique 1, et la couronne extérieure engrène avec l'arbre de sortie 9.

L'ensemble moteur 1, 2, 12 est adapté pour fonctionner sélectivement suivant au moins trois modes :

- un mode statique correspondant à une phase d'arrêt du véhicule et à la charge des batteries depuis une source extérieure ;

- un mode électrique pur dans lequel le moteur thermique est stoppé, la puissance motrice totale étant ainsi égale à la puissance fournie par le ou les moteurs électriques, corrigée par les coefficients de rendement de la chaîne de transmission correspondante, et

- un mode hybride dans lequel le moteur thermique fonctionne et le moteur électrique (ou les moteurs électriques) fournit de la puissance mécanique à l'arbre de sortie, ou reçoit de la puissance mécanique et réalise en conséquence une charge de la batterie.

Dans tout ce qui suit, on ne considérera que les phases de roulage du véhicule et on ne s'intéressera donc pas au mode statique.

Par ailleurs, dans un souci de clarté et de concision, on ne décrira qu'un mode de réalisation dans lequel le moteur réversible est un moteur électrique unique, étant entendu que l'invention s'applique également à des chaînes de traction hybrides comportant plusieurs moteurs réversibles, par exemple électriques.

L'invention peut aussi être généralisée à d'autres types de moteurs irréversibles et réversibles, fonctionnant avec différents types d'énergies et différents moyens de stockage. A titre d'exemple, les énergies utilisées peuvent être de type pneumatique, mécanique (stockage d'énergie cinétique par volants inertiels), etc...

Sur certains véhicules connus mettant en oeuvre des chaînes de traction de type hybride, les procédés de commande de l'ensemble moteur visant à optimiser la consommation de carburant réalisent une répartition des puissances motrices entre le moteur électrique et le moteur thermique par une optimisation, a priori, de la consommation du moteur thermique seul. Dans de tels procédés de commande, la contribution de la puissance électrique dans la puissance motrice totale est déduite de la puissance du moteur thermique, calculée pour réaliser l'optimisation de la consommation instantanée du moteur thermique.

Un tel fonctionnement ne prend pas en compte la consommation en carburant propre à la charge de la batterie, nécessaire pour faire fonctionner le moteur électrique. En effet, le débit énergétique de la batterie « diffère » la surconsommation de carburant, et n'est donc pas pris en compte dans un calcul d'optimisation instantanée ou moyenne.

D'autres procédés d'optimisation de consommation de carburant prennent en compte la consommation instantanée du moteur électrique sous la forme d'une consommation équivalente en carburant obtenue suivant une modélisation prédéfinie. De tels procédés ne permettent pas une optimisation de la consommation moyenne et sont imprécis.

Un but principal de l'invention est de remédier à cet inconvénient, et de proposer un procédé de commande de l'ensemble moteur d'un véhicule automobile hybride permettant une répartition optimale, en terme de consommation moyenne de carburant, entre les contributions des puissances de type thermique et de type électrique.

A cet effet, dans un procédé de commande conforme à l'invention, on définit des intervalles de temps élémentaires consécutifs, et sur chaque intervalle de temps :

- on estime la valeur d'une variable de route $\mu_1$ significative de conditions de route ;
- on estime la valeur d'une variable $\mu_2$ d'état de charge de l'accumulateur ;
- on détermine, en fonction desdites variables de route $\mu_1$ et d'état de charge $\mu_2$, un mode de fonctionnement de l'ensemble moteur parmi au moins un mode hybride et un mode réversible pur, et si le mode de fonctionnement est un mode hybride, on commande le moteur irréversible et le moteur réversible de la façon suivante :

- on estime la valeur de la vitesse du véhicule;

- on estime une valeur de consigne de couple à la roue désiré par le conducteur, en fonction d'une variable dépendant d'une action du conducteur sur la commande d'accélération ;
- on calcule à partir de ces valeurs estimées et de données pré-enregistrées, un ensemble de valeurs possibles de puissance du moteur irréversible $P_{TH}$, de consommation en énergie instantanée C, et de puissance $P_{BAT}$ délivrée au moteur réversible par l'accumulateur ; et
- on choisit comme point de fonctionnement pour élaborer la consigne de commande, le point $P_{TH}$, C, $P_{BAT}$ parmi ces valeurs possibles, tel que la relation suivante est vérifiée en ce point :

$$\frac{\partial C}{\partial P_{BAT}} = - \mu_1.$$

Suivant d'autres caractéristiques du procédé de l'invention :

- on détermine, pour chaque intervalle de temps élémentaires, le mode de fonctionnement de l'ensemble moteur de la façon suivante :

  . si la valeur de la variable d'état de charge $\mu_2$ est inférieure à une valeur de seuil prédéterminée, on impose un mode hybride comme mode de fonctionnement, dans lequel l'accumulateur reçoit de la puissance du moteur réversible. Sinon :

  . on calcule, à partir des valeurs estimées et des lois pré-enregistrées, une valeur théorique $C_o$ de consommation d'énergie instantanée correspondant à une valeur de consigne de puissance du moteur irréversible $P_{TH}$ égale à la puissance à fournir pour parvenir à la valeur de couple à la roue égale à la consigne sans apport de puissance $P_{EL}$ du moteur réversible, et une valeur théorique $P_o$ de puissance électrique $P_{BAT}$ délivrée par l'accumulateur pour parvenir à une valeur de couple à la roue égale à la consigne sans apport de puissance $P_{TH}$ du moteur irréversible;

  . on calcule le rapport $\frac{C_0}{P_0}$ de cette consommation théorique sur cette puissance théorique ;

  . on compare la valeur absolue de ce rapport $\frac{C_0}{P_0}$ à une variable lente positive $\mu_3$ déterminée pour un ensemble de plusieurs intervalles de temps élémentaires consécutifs, et dépendant de caractéristiques de route, de caractéristiques liées au véhicule, et de caractéristiques d'état de l'accumulateur d'énergie; et

  . si la valeur absolue de ce rapport est supérieure à ladite troisième variable lente $\mu_3$, on impose le mode réversible pur comme mode de fonctionnement ; et

. si la valeur absolue de ce rapport est inférieure à ladite troisième constante $\mu_3$, on impose un mode hybride comme mode de fonctionnement de l'ensemble moteur ;

- le moteur irréversible est un moteur thermique ;
- le moteur réversible est un moteur électrique et l'accumulateur d'énergie est un accumulateur électrique.

L'invention va maintenant être décrite plus en détails en se référant aux figures 4A, 4B, 5 et 6 des dessins annexés, sur lesquels :

- les figures 4A, 4B représentent schématiquement le circuit énergétique de la chaîne de traction lorsque la batterie est sollicitée respectivement en décharge et en charge ;
- la figure 5 représente sommairement une cartographie de consommations instantanée et spécifique du moteur thermique, en fonction d'une part de la vitesse du véhicule et de la puissance à la roue ; et
- la figure 6 est un graphe qui illustre la stratégie de commande de l'ensemble moteur suivant l'invention.

L'invention repose sur un principe de répartition de la ressource énergétique du véhicule, entre la source électrique et la source thermique, de manière à minimiser de façon globale la consommation due aux deux sources.

On sait en effet que toute quantité d'énergie prélevée un instant t sur la batterie doit être restituée plus tard au moyen du moteur thermique. Une telle restitution d'énergie entraîne une surconsommation de carburant. Encore une fois, cette règle ne tient pas compte d'éventuels apports énergétiques extérieurs (charge de la batterie en phase statique).

A l'inverse, une recharge de la batterie à un instant t permet, plus tard, une décharge contribuant à la puissance motrice du véhicule, et ainsi à une diminution de la consommation de carburant.

Ainsi, la batterie peut être considérée comme un réservoir de carburant auxiliaire réversible, dont l'utilisation à un instant t affecte de façon différée la consommation de carburant.

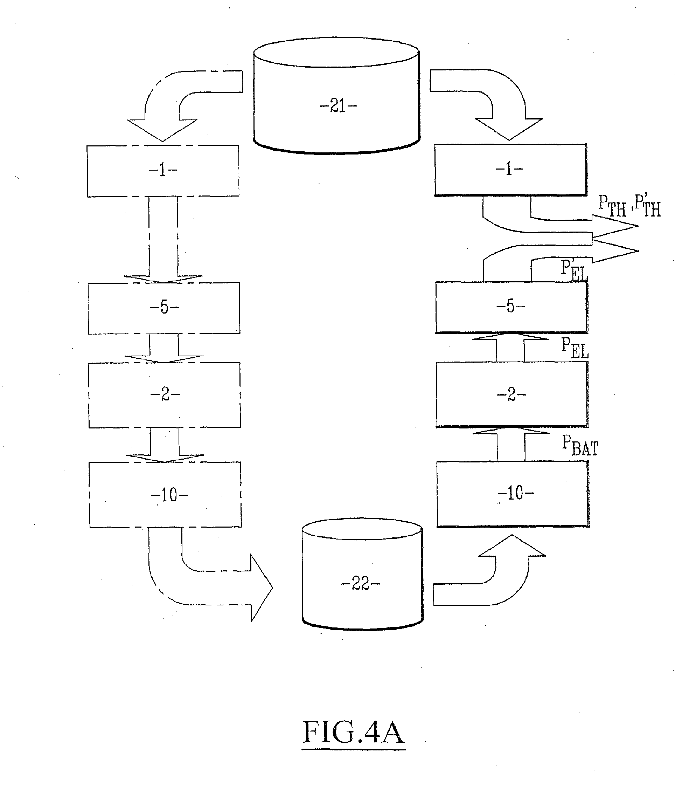

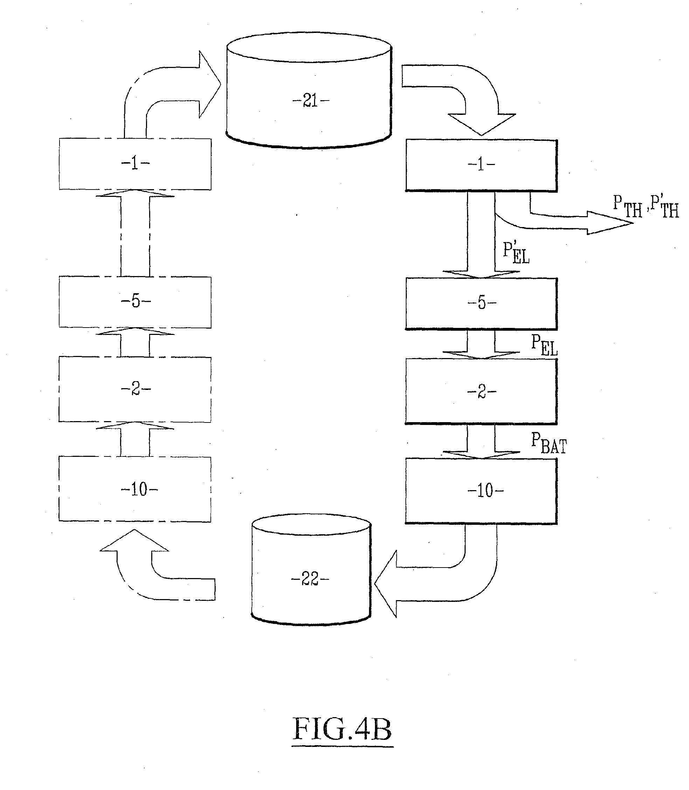

On a représenté sur les figures 4A et 4B le circuit énergétique de la chaîne de traction, respectivement en phase de décharge et de charge de la batterie, pour une configuration « simple-arbre » telle que représentée sur la figure 1.

On a schématisé sous les références 21, 22 les sources énergétiques propres au moteur thermique 1 et au moteur électrique 2 respectivement. En réalité, ces sources sont constituées du carburant uniquement, mais suivant le modèle utilisé dans l'invention, on a représenté un réservoir de carburant principal 21 et un réservoir de carburant auxiliaire 22. Ce dernier est un réservoir fictif d'alimentation ou de décharge de la batterie 10, la transformation du carburant en énergie électrique (figure 4A) et inversement (figure 4B) étant effectuée au travers de la chaîne de traction, suivant le circuit représenté en traits pointillés. Le réservoir 22 est ainsi assimilable à un réservoir-tampon de carburant, alimenté par le réservoir principal 21 pour compenser une décharge de la batterie 10, et fournissant à l'inverse du carburant au réservoir principal 21 lors d'une recharge. Les flux de carburant entre les réservoirs 21, 22 sont soumis aux pertes énergétiques équivalentes dues au rendement de la chaîne de traction.

Le problème résolu par l'invention consiste à minimiser sur un intervalle de temps important une consommation de carburant équivalente totale, définie comme la somme des consommations de carburant des deux moteurs, la consommation en carburant du moteur électrique étant, comme indiqué précédemment, différée dans le temps.

En référence à la figure 4A, la puissance mécanique motrice totale P est égale à la somme de la puissance mécanique produite par la chaîne thermique $P'_{TH}$ et de la puissance mécanique produite par la chaîne électrique $P'_{EL}$ de valeur positive.

Les puissances mécaniques $P'_{TH}$ et $P'_{EL}$ ainsi définies sont égales respectivement à la puissance fournie par le moteur thermique $P_{TH}$ et à la puissance fournie par le moteur électrique $P_{EL}$, corrigées par des coefficients de rendement, notamment mécaniques dus aux éléments de transmission (réducteur, etc.) présents dans la chaîne de traction entre les moteurs 1, 2 et l'arbre moteur 9.

Comme représenté en pointillés, la décharge de la batterie 10 à un instant t est compensée par une recharge différée, grâce au moteur thermique 1, avec un rendement hypothétique moyen.

Sur la figure 4B, on a représenté une phase de recharge de la batterie par prélèvement de puissance en sortie du moteur thermique 1. Une recharge de la batterie peut également être réalisée lors du freinage du véhicule, mais ce cas de figure n'a pas été représenté. En phase de recharge, on ramène la puissance fournie par la batterie 10 à une consommation équivalente de carburant, représentant la quantité de carburant qui serait utilisée par le moteur thermique 1 pour produire la même puissance mécanique à son rendement moyen. Par analyse de la variation des rendements des différents éléments de la chaîne de traction en fonction du point de fonctionnement, on peut estimer la consommation équivalente en carburant du moteur électrique 2.

Suivant l'invention, on peut résoudre le problème consistant en la minimisation de la consommation totale équivalente de l'ensemble moteur 1, 2, c'est-à-dire du moteur thermique 1 et du moteur électrique 2, par l'analyse de la variation de la consommation instantanée C du moteur thermique 1 seul, pour une variation élémentaire de la puissance électrique $P_{BAT}$ fournie par la batterie 10. Cette grandeur est représentée par le rapport $R = \frac{\partial C}{\partial P_{BAT}}$.

Le rapport R est indirectement tiré de cartographies pré-enregistrées, du type de celles qui permettent, dans l'état de la technique, d'optimiser la consommation instantanée du moteur thermique seul.

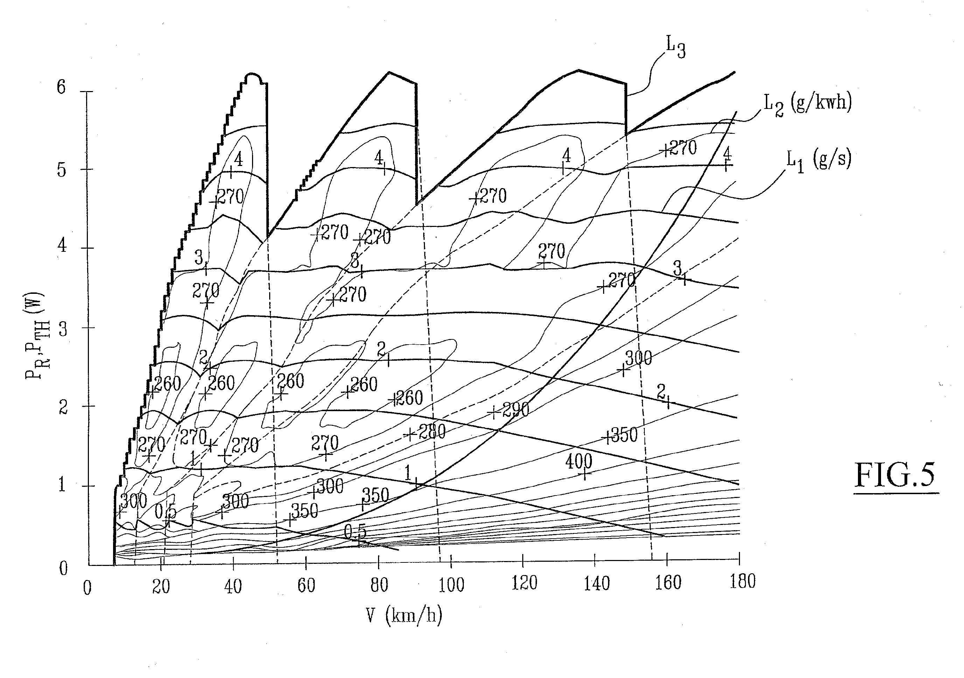

Une cartographie donnant C en fonction de $P_{TH}$ (courbes $L_1$ définies ci-après) est représentée sommairement sur la figure 5.

Le rapport R est déduit de cette cartographie en utilisant la relation $R = \frac{\partial C}{\partial P_{TH}} \cdot \frac{\partial P_{TH}}{\partial P_{BAT}}$ où $\frac{\partial P_{TH}}{\partial P_{BAT}}$ est une grandeur connue sensiblement constante.

La cartographie donnée en exemple sur la figure 5 est définie par un ensemble de lignes tracées dans un système d'axes représentant en abscisse la vitesse V du véhicule (en km/h), et en ordonnée la puissance à la roue $P_R$ (en Watts). La puissance à la roue $P_R$ est une grandeur significative du couple à roue M, l'une ou l'autre des grandeurs pouvant être utilisée indifféremment dans les cartographies. De façon connue, le couple à la roue M (ou la puissance $P_R$) est calculé en fonction d'un paramètre de commande d'accélération $\alpha$, qui peut être une position de la pédale d'accélérateur donnée en pourcentage de la course totale de la pédale.

L'ensemble de lignes défini par la cartographie est composé notamment :

- d'un premier sous-ensemble de courbes d'iso-consommation instantanée (en grammes par seconde) ; ces courbes sont désignées par $L_1$ ;
- d'un deuxième sous-ensemble de courbes d'iso-consommation spécifique (en grammes par kW/h) significatif du rendement du moteur thermique ; ces courbes sont désignées par la référence $L_2$ ;
- d'une courbe d'optimisation $L_3$ définie par les points correspondants à la consommation instantanée C minimale du moteur thermique, pour des puissances de roue données.

Une telle cartographie donne également accès à l'évolution du rapport R précédemment défini, le long de cette courbe d'optimisation $L_3$.

Dans le procédé suivant l'invention, on va définir comme valeur -cible de puissance du moteur thermique $P_{TH}$ et comme valeur-cible de puissance électrique délivrée par la batterie $P_{BAT}$, les valeurs correspondant au point de fonctionnement où la relation $R = -\mu_1$ est vérifiée, $\mu_1$, étant une première variable lente dépendant du type de trajet ou de route, et éventuellement de caractéristiques intrinsèques du véhicule. Cette variable lente $\mu_1$ est de valeur typiquement comprise entre 150 et 400 g/kwh, de préférence entre 200 et 250 g/kwh.

Une variable lente désigne une variable variant lentement, en l'occurrence au regard de la durée d'un intervalle de temps élémentaire $t_i$ d'échantillonnage. Les intervalles de temps élémentaires $t_i$ peuvent être de quelques millisecondes (typiquement 10 ms).

Le rapport R défini précédemment est significatif de l'intérêt, en vue de l'optimisation de consommation globale du carburant, de décharger, recharger la batterie, ou rester en sous-mode thermique pur (sous-mode du mode hybride). La contribution du moteur électrique dans le bilan de puissance est alors nulle. Il va de soi que R a une valeur négative qui fait que la consommation instantanée C du moteur thermique 1 diminue lorsque la puissance de décharge $P_{BAT}$ de la batterie 10 augmente.

L'estimation au point de fonctionnement ($P_{TH}$, $P_{BAT}$, C) du rapport R est réalisée à partir des cartographies utilisées dans le calculateur du véhicule, à très haute fréquence. On détermine ensuite, à chaque instant $t_i$, le point de fonctionnement défini par la valeur de consigne de puissance du moteur thermique $P_{TH}$, la consommation en carburant instantanée du moteur thermique correspondant à cette valeur C, et la puissance électrique $P_{BAT}$ délivrée au moteur électrique par la batterie.

Pour trouver ce point de fonctionnement, on estime la vitesse du véhicule V et une consigne de couple à la roue M ou de puissance à la roue $P_R$ désirée par le conducteur, cette consigne étant déterminée par la commande d'accélération du conducteur, et par exemple traduite par un capteur de position de pédale d'accélérateur.

Par estimation, on entend la mesure directe par un capteur approprié ou le calcul à partir d'autres variables mesurées.

Avant d'obtenir les valeurs de consigne à partir de ces valeurs estimées V, M et des cartographies, le calculateur détermine si le mode de fonctionnement peut être un mode hybride, ou à l'inverse, un mode électrique pur.

La détermination du mode de fonctionnement de l'ensemble moteur, soit en mode hybride, soit en mode électrique pur, dépend des caractéristiques liées au véhicule, qui peuvent être des caractéristiques permanentes, et/ou des caractéristiques de vitesse, d'accélération, de position, etc, de caractéristiques de route, et de caractéristiques d'état de la batterie électrique 10.

En particulier, on comprend qu'il est nécessaire d'estimer l'état de charge de la batterie 10 avant de réaliser des opérations de calcul visant à optimiser la répartition des puissances motrices, entre le moteur thermique 1 et le moteur électrique 2. En effet, si la batterie 10 est déchargée, il est nécessaire d'imposer un mode hybride permettant d'effectuer sa recharge.

On estime ou on mesure, par tout moyen adapté, l'état de charge de la batterie 10. On détermine ainsi, sur chaque intervalle de temps élémentaire $t_i$ une

deuxième variable lente $\mu_2$, par exemple comprise entre les valeurs-limites 0 et 1 correspondant respectivement à une décharge complète de la batterie 10 et à une charge maximale. $\mu_2$ désigne ici une variable de charge.

D'autre part, les caractéristiques liées au véhicule et à la route permettent par exemple de détecter des conditions de conduite en ville, qui déterminent des conditions de passage forcé en mode électrique.

A l'inverse, il peut être utile d'imposer un sous-mode thermique pur lors d'une conduite à grande vitesse, notamment sur autoroute.

Pour caractériser l'ensemble des conditions déterminant le fonctionnement de l'ensemble moteur, on calcule une troisième variable lente $\mu_3$ positive pour un ensemble de plusieurs intervalles de temps élémentaires $t_i$. La variable lente $\mu_3$ dépend des caractéristiques de route, de caractéristiques liées au véhicule, et de caractéristiques d'état de la batterie. Par exemple, les caractéristiques de route comprennent la pente de la route, estimée au moyen de capteurs de pente connus dans l'état de la technique. Les caractéristiques liées au véhicule comprennent la vitesse du véhicule et les caractéristiques propres au type de véhicule. Les caractéristiques d'état de la batterie sont données par la constante de charge $\mu_2$ déjà mentionnée.

Les caractéristiques précitées permettent non seulement de déterminer le mode de fonctionnement de l'ensemble moteur 1, 2, mais également de déterminer la première variable lente $\mu_1$. Les variables lentes $\mu_1$ et $\mu_3$ sont calculées pour des intervalles de temps beaucoup plus grands que les intervalles de temps élémentaires $t_i$ définis plus haut. Les intervalles de calcul des variables lentes $\mu_1$, et $\mu_3$ peuvent être de plusieurs minutes ou dizaines de minutes. Ils ne sont pas nécessairement les mêmes pour le calcul de ces deux variantes. A l'inverse, la valeur de $\mu_2$ est calculée pour chaque intervalle $t_i$, même si ses variations sont lentes.

Pour déterminer le mode de fonctionnement de l'ensemble moteur 1, 2, 12, on procède de la façon suivante, à chaque intervalle de temps élémentaire $t_i$ :

- on calcule la valeur de la variable lente $\mu_2$ et on la compare à une valeur de seuil prédéterminée $S_2$. Si $\mu_2 < S_2$, cela signifie que la charge de la batterie est insuffisante pour que l'on se place dans un mode hybride dans lequel le moteur électrique fournit une puissance motrice. Dans ce cas, on impose un mode hybride dans lequel seul le moteur thermique fournit une puissance motrice et durant lequel on effectue la recharge de la batterie. Sinon :

- on calcule, à partir des valeurs estimées V, M et des lois pré-enregistrées données par les cartographies $L_1$, une valeur théorique $C_0$ de consommation de carburant instantanée, et une valeur théorique $P_0$ de puissance électrique. La valeur théorique $C_0$ de consommation correspond à une valeur de consigne de puissance du moteur thermique $P_{TH}$ égale à la puissance à fournir pour parvenir à la valeur de couple à la roue $P_R$ égale à la consigne M, sans apport de puissance $P_{EL}$ du moteur électrique 2, 12. La valeur théorique $P_0$ de puissance électrique correspond à la puissance électrique $P_{BAT}$ délivrée par le générateur 10 pour parvenir à une valeur de couple à la roue égale à la consigne M sans apport de puissance $P_{TH}$ du moteur électrique 1 ;

- on calcule le rapport $\dfrac{C_0}{P_0}$ de cette consommation théorique sur cette puissance théorique ; et

- on compare la valeur absolue de ce rapport $\dfrac{C_0}{P_0}$ à la troisième constante $\mu_3$.

- si la valeur absolue de ce rapport $\dfrac{C_0}{P_0}$ est supérieure à ladite troisième constante $\mu_3$, on impose le mode électrique pur comme mode de fonctionnement ; et

- si la valeur absolue de ce rapport est inférieure à ladite troisième constante $\mu_3$, on impose le mode hybride comme mode de fonctionnement de l'ensemble moteur.

Si le mode de fonctionnement ainsi déterminé est un mode hybride, dans lequel il est nécessaire de réaliser l'optimisation des répartitions de puissance, on réalise l'opération d'optimisation durant chaque intervalle de temps élémentaire $t_i$ de la façon suivante : on choisit comme point de fonctionnement $P_{BAT}$, $P_{TH}$, C pour élaborer la consigne de commande, le point de la courbe $L_1$ qui vérifie la relation $\dfrac{\partial C}{\partial P_{BAT}}$ = - $\mu_1$.

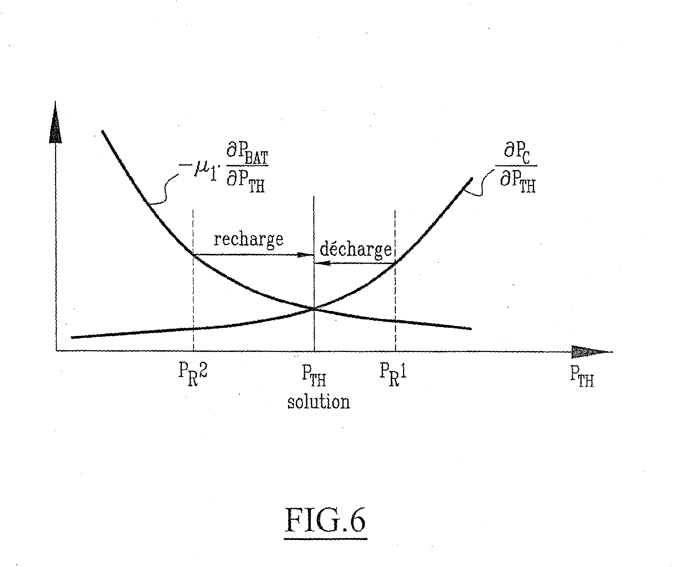

La stratégie d'optimisation décrite ci-dessus répond au principe illustré sur le schéma explicatif de la Figure 6, et exposé dans ce qui suit.

Premier cas :

Si R, correspondant à une puissance à la roue $P_R1$, avait une valeur absolue élevée, c'est-à-dire supérieure à $\mu_1$, on estimerait qu'une faible augmentation de décharge de la batterie provoquerait une forte baisse de la consommation instantanée C du moteur thermique 1. Il y aurait par conséquent intérêt, pour l'optimisation globale de la consommation, à décharger la batterie 10.

Deuxième cas :

A l'inverse, si le rapport R, correspondant à une puissance à la roue $P_R2$, était faible en valeur absolue, c'est-à-dire inférieure à $\mu1$, on estimerait qu'une faible augmentation de consommation instantanée C du moteur thermique 1 conduirait à une forte charge de la batterie 10, et qu'il serait avantageux de recharger.

Troisième cas :

Le cas intermédiaire est représenté par le point de consigne pour lequel R = -μ1. Dans ce cas, la stratégie d'optimisation consiste à maintenir l'ensemble moteur en sous-mode thermique pur.

**Revendications**

1. Procédé de commande de l'ensemble moteur d'un véhicule automobile de type hybride, ledit ensemble moteur (1, 2, 12) comportant un moteur irréversible (1) et au moins un moteur réversible (2, 12) relié à un accumulateur d'énergie (10), ledit ensemble moteur (1, 2, 12) entraînant un arbre de sortie (9) relié à des roues (8) du véhicule, de sorte que l'arbre de sortie (9) reçoit une puissance mécanique motrice totale (P) résultant de la puissance mécanique fournie par ledit moteur irréversible ($P_{TH}$) et de la puissance mécanique fournie ou absorbée par ledit moteur réversible ($P_{EL}$), l'ensemble moteur (1, 2, 12) étant adapté pour fonctionner sélectivement suivant un mode réversible pur dans lequel la contribution de la puissance du moteur irréversible dans la puissance totale (P) est nulle, et des modes hybrides dans lesquels la contribution de la puissance du moteur irréversible dans la puissance totale (P) est non nulle, procédé dans lequel on définit des intervalles de temps élémentaires consécutifs ($t_i$), et sur chaque intervalle de temps :

   - on estime la valeur d'une variable de route ($μ_1$) significative de conditions de route ;
   - on estime la valeur d'une variable ($μ_2$) d'état de charge de l'accumulateur (10) ;
   - on détermine, en fonction desdites variables de route ($μ_1$) et d'état de charge ($μ_2$), un mode de fonctionnement de l'ensemble moteur (1, 2, 12) parmi au moins un mode hybride et un mode réversible pur, et si le mode de fonctionnement est un mode hybride, on commande le moteur irréversible (1) et le moteur réversible (2, 12) de la façon suivante :

      - on estime la valeur de la vitesse du véhicule (V) ;
      - on estime une valeur de consigne (M) de couple à la roue désiré par le conducteur, en fonction d'une variable (α) dépendant d'une action du conducteur sur la commande d'accélération ;
      - on calcule à partir de ces valeurs estimées (M, V) et de données pré-enregistrées ($L_1$), un ensemble de valeurs possibles de puissance du moteur irréversible ($P_{TH}$), de consommation en énergie instantanée (C), et de puissance ($P_{BAT}$) délivrée au moteur réversible (2, 12) par l'accumulateur (10) ; et
      - on choisit comme point de fonctionnement pour élaborer la consigne de commande, le point ($P_{TH}$, C, $P_{BAT}$) parmi ces valeurs possibles, tel que la relation suivante est vérifiée en ce point :

$$\frac{\partial C}{\partial P_{BAT}} = -μ_1.$$

2. Procédé de commande suivant la revendication 1, **caractérisé en ce qu'**on détermine, pour chaque intervalle de temps élémentaires ($t_i$), le mode de fonctionnement de l'ensemble moteur (1, 2, 12) de la façon suivante :

   - si la valeur de la variable d'état de charge ($μ_2$) est inférieure à une valeur de seuil ($S_2$) prédéterminée, on impose un mode hybride comme mode de fonctionnement, dans lequel l'accumulateur (10) reçoit de la puissance du moteur réversible, sinon :

   - on calcule, à partir des valeurs estimées (V, M) et des lois pré-enregistrées, une valeur théorique ($C_o$) de consommation d'énergie instantanée correspondant à une valeur de consigne de puissance du moteur irréversible ($P_{TH}$) égale à la puissance à fournir pour parvenir à la valeur de couple à la roue égale à la consigne (M) sans apport de puissance ($P_{EL}$) du moteur réversible (2, 12), et une valeur théorique ($P_o$) de puissance électrique ($P_{BAT}$) délivrée par l'accumulateur (10) pour parvenir à une valeur de couple à la roue égale à la consigne (M) sans apport de puissance ($P_{TH}$) du moteur irréversible (1) ;
   - on calcule le rapport ($\frac{C_0}{P_0}$) de cette consommation théorique sur cette puissance théorique ;
   - on compare la valeur absolue de ce rapport ($\frac{C_0}{P_0}$) à une variable lente positive ($μ_3$) déterminée pour un ensemble de plusieurs intervalles de temps élémentaires ($t_i$) consécutifs, et dépendant de caractéristiques de route, de caractéristiques liées au véhicule, et de caractéristiques d'état de l'accumulateur d'énergie (10) ; et
   - si la valeur absolue de ce rapport est supérieure à ladite troisième variable lente ($μ_3$), on impose le mode réversible pur comme mode de fonctionnement ; et
   - si la valeur absolue de ce rapport est inférieure à ladite troisième constante ($μ_3$), on impose un mode hybride comme mode de fonctionnement de l'ensemble moteur (1, 2, 12).

3. Procédé de commande suivant la revendication 1 ou 2, **caractérisé en ce que** le moteur irréversible (1) est un moteur thermique.

4. Procédé de commande suivant l'une quelconque des revendications 1 à 3, **caractérisé en ce que** le moteur réversible (2, 12) est un moteur électrique et l'accumulateur d'énergie (10) est un accumulateur électrique.

FIG.1

FIG.2

FIG.3

$P_{TH}, P'_{TH}$

$P'_{EL}$

$P_{EL}$

$P_{BAT}$

FIG.4A

FIG.4B

FIG.5

FIG.6

**Office européen des brevets**

## RAPPORT DE RECHERCHE EUROPEENNE

Numéro de la demande

EP 04 29 0280

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2002/107618 A1 (DEGUCHI YOSHITAKA ET AL) 8 août 2002 (2002-08-08) * page 4, alinéa 52 - page 8, alinéa 85; figures 5-8 * | 1-4 | B60K6/04 |
| A | US 2002/065165 A1 (LASSON ANDERS ET AL) 30 mai 2002 (2002-05-30) * abrégé; figure 3 * | 1 | |
| A | US 6 314 347 B1 (DEGUCHI YOSHITAKA ET AL) 6 novembre 2001 (2001-11-06) * colonne 5, ligne 13 - colonne 7, ligne 65; figure 6 * | 1 | |

DOMAINES TECHNIQUES RECHERCHES (Int.Cl.7)

B60K

Le présent rapport a été établi pour toutes les revendications

| Lieu de la recherche | Date d'achèvement de la recherche | Examinateur |
|---|---|---|
| BERLIN | 23 avril 2004 | Wiberg, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 04 29 0280

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-04-2004

| Document brevet cité au rapport de recherche | | Date de publication | Membre(s) de la famille de brevet(s) | | Date de publication |
|---|---|---|---|---|---|
| US 2002107618 | A1 | 08-08-2002 | JP | 2001298805 A | 26-10-2001 |
| US 2002065165 | A1 | 30-05-2002 | US | 6336063 B1 | 01-01-2002 |
| | | | US | 2002063001 A1 | 30-05-2002 |
| | | | US | 2002052677 A1 | 02-05-2002 |
| | | | US | 2002065589 A1 | 30-05-2002 |
| | | | US | 2002064707 A1 | 30-05-2002 |
| | | | US | 2002063002 A1 | 30-05-2002 |
| US 6314347 | B1 | 06-11-2001 | JP | 2000333305 A | 30-11-2000 |

EPO FORM P0460

Pour tout renseignement concernant cette annexe : voir Journal Officiel de l'Office européen des brevets, No.12/82